# EUROPÄISCHE PATENTSCHRIFT

(11) **EP 0 961 701 B1**
(45) Veröffentlichungstag und Bekanntmachung des Hinweises auf die Patenterteilung: **29.05.2002**
(21) Anmeldenummer: 98912249.4
(22) Anmeldetag: 17.02.1998
(51) Int. Cl.: B60H 1/24

(54) **ENTLÜFTUNGSVORRICHTUNG UND VERFAHREN ZU IHRER HERSTELLUNG**
VENTILATION DEVICE AND METHOD FOR PRODUCING SAME
DISPOSITIF DE VENTILATION ET PROCEDE PERMETTANT DE LE PRODUIRE

(30) Priorität: 20.02.1997 DE 19706734
(43) Veröffentlichungstag der Anmeldung: 08.12.1999
(73) Patentinhaber: ADAM OPEL AG, 65423 Rüsselsheim (DE); AKT Altmärker Kunststoff-Technik GmbH & Co. KG, 39638 Gardelegen (DE)
(72) Erfinder: SPRINGER, Peter, D-65462 Gustavsburg (DE); FLEISCHER, Dieter, D-65474 Bischofsheim (DE); BERLIN, Ralf, D-39638 Wiepke (DE); KLINGER, Rudi, D-39638 Gardelegen (DE)
(74) Vertreter: Kümpfel, Heinz, Dipl.-Ing.
(86) Internationale Anmeldenummer: DE9800455
(87) Internationale Veröffentlichungsnummer: WO9836924

(56) Entgegenhaltungen:
- EP-A- 0 467 095
- EP-A- 0 728 605
- DE-A- 19 549 124
- DE-A- 19 629 115
- US-A- 4 667 578

## Beschreibung

Die Erfindung bezieht sich auf eine Entlüftungsvorrichtung mit den im Oberbegriff des Patentanspruchs 1 angegebenen Merkmalen sowie auf Verfahren zur Herstellung dieser Entlüftungsvorrichtungen.

In Kraftfahrzeugen werden Entlüftungsvorrichtungen der genannten Art verwendet, um das Ausströmen von Abluft aus dem Fahrzeuginnenraum zu ermöglichen. Es soll jedoch verhindert werden, daß über diese Vorrichtungen Luft oder Schadstoffe in das Fahrzeug eindringen.

Ein Gehäuse der Entlüftungsvorrichtung, welches auch mehrteilig ausgeführt sein kann, wird in eine Karosserieöffnung eingesetzt und Abschlußklappen (zumindest eine) sind schwenkbeweglich in dem Gehäuse gelagert. Im Normalfall verschließen sie je eine Gehäuseöffnung, bewegen sich jedoch in Offen-Stellungen, wenn im Fahrgastraum des Kraftfahrzeugs ein höherer Druck herrscht als in der Umgebung des Fahrzeugs.

Die Abschlußklappen sollen leicht und zuverlässig beweglich sein und im geschlossenen Zustand möglichst gut zum Gehäuse abdichten. Entlüftungsvorrichtungen der genannten Art sind beispielsweise bekannt aus der EP 0 467 095 B1 der EP 0 728 605 A1 sowie aus der US-PS 4 667 578.

In der erstgenannten Druckschrift EP 0 467 095 B1 ist eine Entlüftungsvorrichtung beschrieben, die als einstückige Einheit hergestellt wird. Die Abschlußklappe ist über ein Filmscharnier mit dem Gehäuse verbunden und besteht aus dem Gehäusematerial, welches relativ hart sein muß. Die Abschlußklappen müssen im Kunststoff-Spritzverfahren in geöffneter Position hergestellt werden, da sie sonst eine Verbindung mit dem Gehäuse eingehen. Die Fertigung ist zwar vereinfacht, aber ein Klappern der Abschlußklappen ist zu erwarten und eine Dichtung zwischen Klappen und Gehäuse ist nicht vorgesehen.

In der US-PS 4 667 578 ist eine Entlüftungsvorrichtung gezeigt, deren Gehäuse und Abschlußklappen getrennt voneinander gefertigt werden. Das Gehäuse besteht aus relativ hartem Kunststoff und die Abschlußklappen sind dünn und flexibel. Ein weich-elastischer Kunststoff wird zur Anwendung kommen, so daß die Klappenenden mittels der vorgesehenen Verbindungselemente formschlüssig am Gehäuse angebracht werden können. Es ist mit einer guten Dichtheit und kaum mit Klappergeräuschen zu rechnen, jedoch ist die Herstellung der Entlüftungsvorrichtung in zwei Formwerkzeugen aufwendig. Der Vorgang der manuellen Verbindung von Abschlußklappen und Gehäuse führt zu hohen Kosten und ermöglicht unerwünschte Montagefehler.

In der gattungsgmäßen EP 0 728 605 A1 sind Entlüftungsvorrichtungen beschrieben, die in einer anderen Weise hergestellt werden. Das Gehäuse und die Abschlußklappen werden aus relativ hartem Kunststoff gefertigt, anschließend werden Verbindungsbereiche und Dichtungen aus einem flexiblen Kunststoff gefertigt. Da die Verbindungs- und Dichtungsbereiche aus Kunststoff bestehen, der beim Spritzen eine Verbindung mit dem Gehäusematerial und dem Klappenmaterial eingeht, muß die Dichtung beim Spritzen einen Abstand zum Gehäuse aufweisen. Sonst wären die Abschlußklappen nicht in Offen-Stellungen beweglich. Nach der EP 0 728 605 A1 wird ein Teil des Gehäuses nachträglich eingesetzt, was Arbeitsaufwand und Fehlerquellen in sich birgt.

Es ist Aufgabe der Erfindung, eine Entlüftungsvorrichtung der genannten Art zu schaffen, die mit geringem Aufwand und möglichst fehlerfrei herstellbar ist, sich dabei aber durch eine gute Funktionalität (Dichtheit, Klapperfreiheit, ...) auszeichnet.

Zur Lösung dieser Aufgabe zeichnet sich die erfindungsgemäße Entlüftungsvorrichtung durch die im Patentanspruch 1 angegebenen Merkmale aus. Einzelheiten ergeben sich aus den Patentansprüchen 2 bis 4. Verfahren zur Herstellung der Entlüftungsvorrichtung sind in den Patentansprüchen 5 und 6 angegeben.

Zur Herstellung der Entlüftungsklappen kommt die Kunststoff-Spritztechnik zur Anwendung, wobei nur ein Formwerkzeug benötigt wird. Werden Kunststoffe verschiedener Art bzw. Härten mittels der Spritztechnik verarbeitet, ist zu beachten (wenn ein Übereinanderspritzen erfolgt), daß einige Kunststoffe eine feste mechanische Verbindung miteinander eingehen und andere nicht. Diesen Effekt macht sich die Erfindung zunutze. Bei Kunststoffen, die keine mechanische Verbindung miteinander eingehen, kann eines der Kunststoffmaterialien während des Spritzens des anderen Kunststoffs abschnittsweise als Formwerkzeug dienen. Gleichzeitig kann der gerade zu verspritzende Kunststoff mit einem anderen Kunststoffelement im Formwerkzeug eine mechanische Verbindung eingehen. Dort findet eine intensive mechanische Verklammerung statt. Dieser Begriff wird in der Werkstoffwissenschaft verwendet, wenn ein Stoff mit einem anderen benetzt wird und sich dabei atomare und molekulare Bindungen an den Phasengrenzflächen herausbilden. Hierzu sind nur artverwandte Stoffe geeignet. Bei Kunststoffen sehr unterschiedlicher Härte kann keine mechanische Verklammerung der genannten Art gebildet werden und sie verbinden sich beim Spritzen nur formschlüssig, wenn entsprechende formelle Voraussetzungen gegeben sind.

Bestehen das Gehäuse, die Abschlußklappe und die Dichtung der Entlüftungsvorrichtung aus drei verschiedenen Kunststoffen, kann das Gehäuse (relativ hart) abschnittsweise als Formwerkzeug für die Dichtung (weichelastisch) dienen. Die Abschlußklappe hingegen kann aus einem Werkstoff bestehen, welcher eine mechanische Verklammerung mit dem Dichtungsmaterial eingeht. Für die Materialauswahl des Verbindungselementes zwischen Gehäuse und Abschlußklappe bestehen verschiedene Möglichkeiten, auf die detailliert in der folgenden Beschreibung von Ausführungsbeispielen eingegangen wird.
- Fig. 1: zeigt schematisch einen Abschnitt einer Entlüftungsvorrichtung für ein Kraftfahrzeug in einer ersten Ausführung und
- Fig. 2: zeigt ebenfalls nur schematisch einen Abschnitt einer Entlüftungsvorrichtung anderer Ausführung.

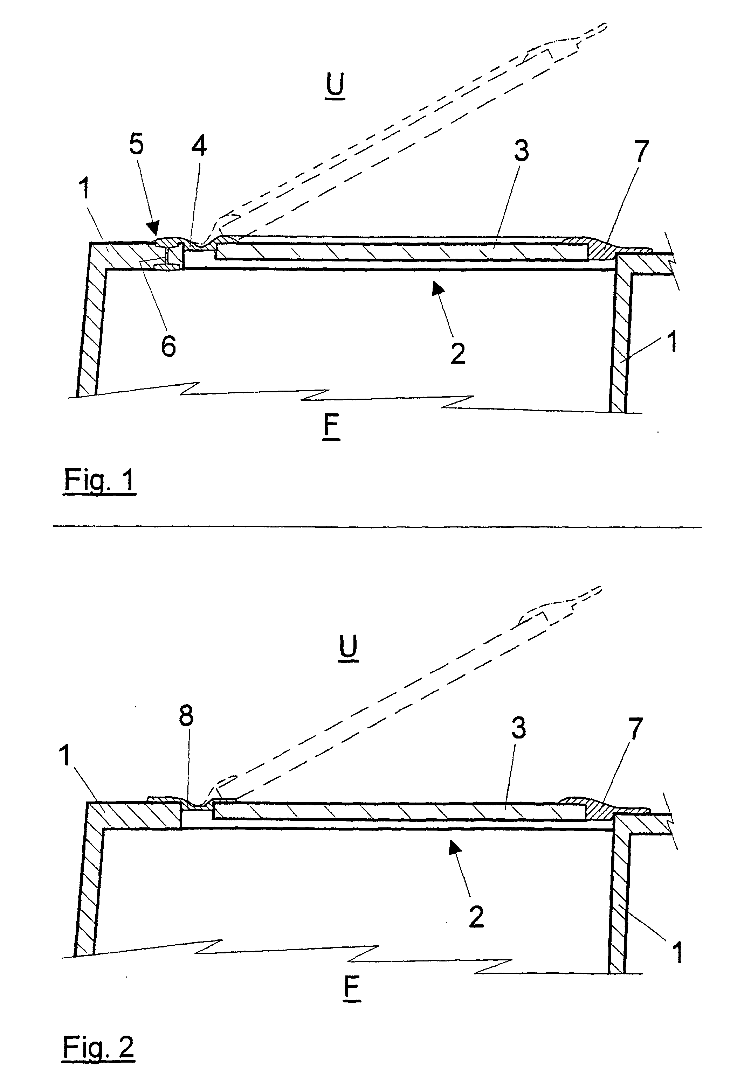

Fig. 1 zeigt eine aus drei Kunststoffkomponenten bestehende Entlüftungsvorrichtung. Ein Gehäuse 1 wird aus relativ hartem Kunststoff hergestellt. Es wird in einem Formwerkzeug mittels Kunststoff-Spritztechnik gefertigt und weist zumindest eine Öffnung 2 auf. Wenn das Gehäuse 1 in eine Öffnung einer Kraftfahrzeugkarosserie eingesetzt ist, kann Luft durch die Öffnung 2 aus dem Fahrzeuginnenraum F in die Fahrzeugumgebung U entweichen. Zur Verhinderung einer umgekehrten Luftströmung ist eine die Öffnung 2 verschließende, jedoch in Offen-Stellungen verschwenkbare Abschlußklappe 3 vorgesehen. Die Abschlußklappe 3 ist aus weniger hartem Material gefertigt als das Gehäuse 1, wobei beim Spritzen dieses Klappen-Kunststoffs das gleiche Formwerkzeug genutzt werden kann wie beim Spritzen des Gehäuses 1. Die Abschlußklappe 3 wird derart gespritzt, daß sie sich in einer geschlossenen Position befindet. Eine geöffnete Position ist in den Figuren strichliniert dargestellt.

Zur schwenkbeweglichen Verbindung der Abschlußklappe 3 mit dem Gehäuse 1 wird eine dritte Kunststoffkomponente in Form eines Verbindungselementes 4 gespritzt. Es kommt ein weich-elastischer Kunststoff zum Einsatz und beim Spritzen dienen Abschnitte des Gehäuses 1 und der Abschlußklappe 3 als Formwerkzeug. In den Bereichen, in denen das Gehäuse 1 und die Abschlußklappe 3 mit der dritten Kunststoffkomponente benetzt werden, entstehen wegen der unterschiedlichen Kunststoffqualitäten unterschiedliche Wirkungen. Zwischen Verbindungselement 4 und Abschlußklappe 3 entsteht eine intensive mechanische Werkstoff-Verklammerung in der weiter oben beschriebenen Art, da hier Kunststoffe mit geringen Härteunterschieden in Kontakt gelangen. Die Auswahl der Kunststoffqualität erfolgt nach dieser Prämisse. Die Auswahl des Gehäusematerials erfolgt so, daß das Material des Verbindungselementes 4 mit dem des Gehäuses 1 keine derartige Verklammerung eingeht. Aus diesem Grund sind im Bereich 5 des Gehäuses 1 Durchbrüche 6 vorgesehen, welche eine formschlüssige Verbindung des Verbindungselementes 4 mit dem Gehäuse 1 ermöglichen. Vor dem Spritzen des Verbindungselementes 4 werden Schieber des Formwerkzeugs gezogen, die die Durchbrüche 6 beim Spritzen des Gehäuses 1 frei halten.

Eine Dichtung 7, die endseitig der Abschlußklappe 3 oder an all ihren noch freien Rändern vorgesehen ist, wird aus dem gleichen weich-elastischen Kunststoff wie das Verbindungselement 4 gespritzt, was auch in einem Vorgang erfolgen kann. Das Material der Dichtung 7 verbindet sich durch Verklammern mit der Abschlußklappe 3, nicht jedoch mit dem Gehäuse 1. Das Gehäuse 1 ist zu hart, um eine Verbindung mit dem Dichtungsmaterial einzugehen und dient als Formwerkzeug. Die Dichtung 7 wird eine optimal an die Form des Gehäuses 1 angepaßte Form erhalten. Sie kann bei geschlossenen Abschlußklappen 3 gespritzt werden, ohne daß eine feste Verbindung mit dem Gehäuse 1 zu befürchten ist. So wird zur Fertigung der gesamten Entlüftungsvorrichtung nur ein Formwerkzeug benötigt und der Aufwand ist entsprechend gering. Aufgrund der weichen Lagerung und der Abdichtung der Abschlußklappen 3 ist die Funktion ausgezeichnet und Klappergeräusche werden vermieden.

Im zweiten Ausführungsbeispiel (Fig. 2) werden die Dichtung 7 und ein Verbindungselement 8 aus verschiedenen Materialien gefertigt. Insgesamt kommen hier vier Kunststoffkomponenten zur Anwendung, wobei gleiche Elemente auch mit den in Fig. 1 verwendeten Bezugszeichen versehen sind. Das Gehäuse 1 besteht aus einer harten Kunststoffkomponente, die Abschlußklappe 3 aus einer weniger harten und die Dichtung 7 ist aus weich-elastischem Kunststoff gespritzt. Sie geht mit der Abschlußklappe 3 eine Verbindung ein, nicht jedoch mit dem Gehäuse 1, was somit dem gewünschten Effekt entspricht.

Das Verbindungselement 8 ist nunmehr aus einer Kunststoffkomponente gespritzt, die in ihrer Härte etwa zwischen der des Gehäuses 1 und der der Abschlußklappe 3 liegt. Die Auswahl der Kunststoffe erfolgt so, daß das Material des Verbindungselementes 8 sich mechanisch sowohl mit dem Gehäuse 1 als auch mit der Abschlußklappe 3 verklammert. Dabei sind die Materialeigenschaften von Gehäuse 1 und Abschlußklappe 3 jedoch unterschiedlich genug, um den gewünschten Effekt beim Spritzen der Dichtung 7 zu erreichen. Bei dieser Vier-Komponenten-Entlüftungsvorrichtung ist ein Formwerkzeug zur Herstellung einsetzbar, welches ohne Schieber für die Bereiche 5 des Gehäuses 1 auskommt, da das Verbindungselement 8 nicht formschlüssig mit dem Gehäuse 1 verbunden werden muß.

Da beide Verbindungselemente 4, 8 in der geschlossenen Klappenposition gespritzt werden, entstehen keine Vorspannungen innerhalb des Materials in Richtung der geöffneten Position, wie dies aus dem Stand der Technik bekannt ist.

## Patentansprüche

1. Entlüftungsvorrichtung zur Entlüftung des Fahrzeuginnenraumes (F) eines Kraftfahrzeugs mit zumindest einer verschwenkbar mit einem Gehäuse (1) der Entlüftungsvorrichtung verbundenen Abschlußklappe (3), welche mit einer Dichtung (7) versehen ist und in einer Schließstellung eine Gehäuseöffnung (2) verschließt und abhängig von Luftdruckdifferenzen zwischen Fahrzeuginnenraum (F) und der Fahrzeugumgebung (U) in Offen-Stellungen beweglich ist, **dadurch gekennzeichnet, daß** das Gehäuse (1), die Abschlußklappe (3) und die Dichtung (7) in Kunststoff-Spritztechnik aus drei Kunststoffkomponenten unterschiedlicher Härte hergestellt sind, wobei das Gehäuse (1) aus härterem Material als die Abschlußklappe (3) besteht und weich-elastisches Material der Dichtung (7) derart ausgewählt ist, daß es sich beim Spritzen mechanisch mit dem Klappenmaterial, nicht jedoch mit dem Gehäusematerial verklammert.

2. Entlüftungsvorrichtung nach Anspruch 1, **dadurch gekennzeichnet, daß** auch ein Verbindungselement (4) zwischen Gehäuse (1) und Abschlußklappe (3), das der schwenkbeweglichen Lagerung der Abschlußklappe (3) dient, aus dem weich-elastischen Dichtungsmaterial besteht, wobei die Verbindung zwischen Verbindungselement (4) und Abschlußklappe (3) durch mechanisches Verklammern besteht und die Verbindung des Verbindungselementes (4) zum Gehäuse (1) formschlüssig ist.

3. Entlüftungsvorrichtung nach Anspruch 1, **dadurch gekennzeichnet, daß** ein Verbindungselement (8) zwischen Gehäuse (1) und Abschlußklappe (3), das der schwenkbeweglichen Lagerung der Abschlußklappe (3) am Gehäuse (1) dient, aus einer vierten Kunststoffkomponente mit einer Härte, die zwischen der Härte des Gehäuses (1) und der der Abschlußklappe (3) liegt, besteht, und zwischen dieser Komponente eine Verbindung zum Gehäuse (1) und zur Abschlußklappe (3) durch mechanisches Verklammern besteht.

4. Entlüftungsvorrichtung nach Anspruch 2 oder 3, **dadurch gekennzeichnet, dass** das Verbindungselement (4; 8) der Abschlussklappe (3) als Filmscharnier gestaltet ist.

5. Verfahren zur Herstellung einer Entlüftungsvorrichtung für den Fahrzeuginnenraum (F) eines Kraftfahrzeugs mittels mehrstufiger Kunststoff-Spritztechnik, wobei die Entlüftungsvorrichtung aus einem Gehäuse (1), zumindest einer Abschlußklappe (3), einer Dichtung (7) zwischen Gehäuse (1) und Abschlußklappe (3), und aus einem Verbindungselement (4, 8) zur schwenkbeweglichen Lagerung der Abschlußklappe (3) am Gehäuse (1) besteht, **gekennzeichnet durch** die folgenden Verfahrensschritte:
- Spritzen des Gehäuses (1) aus einer harten Kunststoffkomponente in einem Formwerkzeug,
- Spritzen der Abschlußklappe (3) aus einer Kunststoffkomponente geringerer Härte in dem Formwerkzeug ohne Verbindung zum Gehäuse (1), wobei sich die Abschlußklappe (3) in einer Schließposition befindet,
- Spritzen der Dichtung (7) zwischen Abschlußklappe (3) und Gehäuse (1) aus einer weich-elastischen Kunststoffkomponente, wobei das Gehäuse (1) und die Abschlußklappe (3) abschnittsweise als Formwerkzeug dienen und aufgrund der Auswahl der Kunststoffkomponenten eine mechanische Verklammerung zwischen Dichtungsmaterial und Abschlußklappe (3), nicht jedoch zwischen Dichtungsmaterial und Gehäuse (1) entsteht,
- Spritzen des Verbindungselementes (4) zwischen Abschlußklappe (3) und Gehäuse (1) aus dem weich-elastischen Material, aus dem auch die Dichtung (7) besteht, wobei eine mechanische Verklammerung zwischen dem Verbindungselement (4) und der Abschlußklappe (3) entsteht und das Verbindungselement (4) formschlüssig mit dem Gehäuse (1) verbunden wird.

6. Verfahren zur Herstellung einer Entlüftungsvorrichtung für den Fahrzeuginnenraum (F) eines Kraftfahrzeugs mittels mehrstufiger Kunststoffspritztechnik, wobei die Entlüftungsvorrichtung aus einem Gehäuse (1), zumindest einer Abschlußklappe (3), einer Dichtung (7) zwischen Gehäuse (1) und Abschlußklappe (3), und aus einem Verbindungselement (7, 8) zur schwenkbeweglichen Lagerung der Abschlußklappe (3) am Gehäuse (1) besteht, **gekennzeichnet durch** die folgenden Verfahrensschritte:
- Spritzen des Gehäuses (1) aus einer harten Kunststoffkomponente in einem Formwerkzeug,
- Spritzen der Abschlußklappe (3) aus einer Kunststoffkomponente geringerer Härte in dem Formwerkzeug ohne Verbindung zum Gehäuse (1), wobei sich die Abschlußklappe (3) in einer Schließposition befindet,
- Spritzen der Dichtung (7) zwischen Abschlußklappe (3) und Gehäuse (1) aus einer weich-elastischen Kunststoffkomponente, wobei das Gehäuse (1) und die Abschlußklappe (3) abschnittsweise als Formwerkzeug dienen und aufgrund der Auswahl der Kunststoffkomponenten eine mechanische Verklammerung zwischen Dichtungsmaterial und Abschlußklappe (3), nicht jedoch zwischen Dichtungsmaterial und Gehäuse (1) entsteht,
- Spritzen des Verbindungselementes (8) zwischen Abschlußklappe (3) und Gehäuse (1) aus einer Kunststoffkomponente, deren Härte zwischen der des Gehäuses (1) und der der Abschlußklappe (3) liegt, wobei sich eine mechanische Verklammerung zwischen dem Verbindungselement (8) und einerseits der Abschlußklappe (3) aber auch andererseits dem Gehäuse (1) bildet.

## Claims

1. Ventilation device for ventilation of the vehicle interior (F) of a motor vehicle with at least one closure flap (3) which is pivotably connected to a housing (1) of the ventilation device and which is provided with a seal (7) and closes a housing opening (2) in a closed position and is movable into open positions as a function of air pressure differences between the vehicle interior (F) and the vehicle environment (U), **characterised in that** the housing (1), the closure flap (3) and the seal (7) are made by plastic injection moulding technology from three plastic components of different hardness, wherein the housing (1) is made of harder material than the closure flap (3) and soft elastic material of the seal (7) is selected such that during injection moulding it mechanically embraces the flap material, but not the housing material.

2. Ventilation device according to claim 1, **characterised in that** a connecting element (4) between housing (1) and closure flap (3) which is used for pivotable mounting of the closure flap (3) is also made of the soft elastic seal material, wherein the connection between connecting element (4) and closure flap (3) is made by mechanical embracing and the connection of the connecting element (4) to the housing (1) is form-locking.

3. Ventilation device according to claim 1, **characterised in that** a connecting element (8) between housing (1) and closure flap (3) which is used for pivotable mounting of the closure flap (3) on the housing (1) is made from a fourth plastic component having a hardness which is between the hardness of the housing (1) and that of the closure flap (3), and between this component there is a connection to the housing (1) and to the closure flap (3) by mechanical embracing.

4. Ventilation device according to claim 2 or 3, **characterised in that** the connecting element (4; 8) of the closure flap (3) is designed as a film hinge.

5. Method for the manufacture of a ventilation device for the vehicle interior (F) of a motor vehicle by multi-stage plastic injection moulding technology, wherein the ventilation device consists of a housing (1), at least one closure flap (3), a seal (7) between housing (1) and closure flap (3), and a connecting element (4, 8) for pivotable mounting of the closure flap (3) on the housing (1), **characterised by** the following steps:
- injection moulding of the housing (1) from a hard plastic component in a moulding tool,
- injection moulding of the closure flap (3) from a plastic component having a lower hardness in the moulding tool without connection to the housing (1), wherein the closure flap (3) is in a closed position,
- injection moulding of the seal (7) between closure flap (3) and housing (1) from a soft elastic plastic component, wherein the housing (1) and the closure flap (3) in some sections serve as the moulding tool and, on account of the choice of plastic components, mechanical embracing arises between seal material and closure flap (3), but not between seal material and housing (1),
- injection moulding of the connecting element (4) between closure flap (3) and housing (1) from the soft elastic material from which the seal (7) is made as well, wherein mechanical embracing arises between the connecting element (4) and the closure flap (3) and the connecting element (4) is connected to the housing (1) in form-locking relationship.

6. Method for the manufacture of a ventilation device for the vehicle interior (F) of a motor vehicle by multi-stage plastic injection moulding technology, wherein the ventilation device consists of a housing (1), at least one closure flap (3), a seal (7) between housing (1) and closure flap (3), and a connecting element (7, 8) for pivotable mounting of the closure flap (3) on the housing (1), **characterised by** the following steps:
- injection moulding of the housing (1) from a hard plastic component in a moulding tool,
- injection moulding of the closure flap (3) from a plastic component having a lower hardness in the moulding tool without connection to the housing (1), wherein the closure flap (3) is in a closed position,
- injection moulding of the seal (7) between closure flap (3) and housing (1) from a soft elastic plastic component, wherein the housing (1) and the closure flap (3) in some sections serve as the moulding tool and, on account of the choice of plastic components, mechanical embracing arises between seal material and closure flap (3), but not between seal material and housing (1),
- injection moulding of the connecting element (8) between closure flap (3) and housing (1) from a plastic component whose hardness is between that of the housing (1) and that of the closure flap (3), wherein mechanical embracing forms between the connecting element (8) and on the one hand the closure flap (3) but also on the other hand the housing (1).

## Revendications

1. Dispositif de ventilation pour la ventilation de l'habitacle (F) d'un véhicule comportant au moins un volet de fermeture (3) qui est lié de manière pivotante à un boîtier (1) du dispositif de ventilation, est muni d'un joint (7) et qui, dans une position de fermeture, ferme une ouverture (2) du boîtier et, en fonction de différences de pression d'air entre l'habitacle (F) et l'environnement du véhicule (U), peut être amené dans des positions ouvertes, **caractérisé en ce que** le boîtier (1), le volet de fermeture (3) et le joint (7) sont fabriqués par une technique de moulage-injection de matière plastique à partir de trois matières plastiques de dureté différente, le boîtier (1) étant réalisé en une matière plastique plus dure que le volet de fermeture (3) et le matériau élastique souple du joint (7) étant choisi tel, que celui-ci, lors de l'opération de moulage-injection, accroche mécaniquement au matériau du volet de fermeture mais pas au matériau du boîtier.

2. Dispositif de ventilation selon la revendication 1, **caractérisé en ce qu'**un élément de liaison (4) entre le boîtier (1) et le volet de fermeture (3), qui sert au montage pivotant du volet de fermeture (3), est réalisé en le matériau élastique souple du joint, la liaison entre l'élément de liaison (4) et le volet de fermeture (3) étant réalisée par accrochage mécanique et la liaison entre l'élément de liaison (4) et le boîtier (1) étant réalisée par complémentarité de formes.

3. Dispositif de ventilation selon la revendication 1, **caractérisé en ce qu'**un élément de liaison (8) entre le boîtier (1) et le volet de fermeture (3), qui sert au montage pivotant du volet de fermeture (3) sur le boîtier (1), est réalisé en une quatrième matière plastique, ayant une dureté qui est comprise entre la dureté du boîtier (1) et celle du volet de fermeture (3) et **en ce qu'**il existe une liaison par accrochage mécanique entre ce composant et le boîtier (1) ainsi que le volet de fermeture (3).

4. Dispositif de ventilation selon la revendication 2 ou 3, **caractérisé en ce que** l'élément de liaison (4, 8) du volet de fermeture (3) est conformé en charnière-film.

5. Procédé de fabrication d'un dispositif de ventilation pour la ventilation de l'habitacle (F) d'un véhicule, par une technique de moulage-injection en plusieurs étapes, le dispositif de ventilation comprenant un boîtier (1), au moins un volet de fermeture (3), un joint (7) placé entre le boîtier (1) et le volet de fermeture (3), et un élément de liaison (4, 8) pour le montage pivotant du volet de fermeture (3) sur le boîtier (1), **caractérisé par** les étapes de procédé suivantes :
- moulage par injection du boîtier (1), en une matière plastique dure, dans un outil de moulage,
- moulage par injection du volet de fermeture (3), en une matière plastique de moindre dureté, dans l'outil de moulage, sans liaison avec le boîtier (1), le volet de fermeture (3) se trouvant dans une position de fermeture,
- moulage par injection du joint (7) entre le volet de fermeture (3 )et le boîtier (1), en une matière plastique élastique souple, le boîtier (1) et le volet de fermeture (3) servant par tronçons d'outil de moulage et, par le choix des matières plastiques, un accrochage mécanique ayant lieu entre le matériau du joint et le volet de fermeture (3), mais pas entre le matériau du joint et le boîtier (1),
- moulage par injection de l'élément de liaison (4) entre le volet de fermeture (3) et le boîtier (1), en la même matière plastique élastique souple que celle du joint (7), un accrochage mécanique ayant lieu entre le boîtier (1) et le volet de fermeture (3), mais pas entre le joint et le boîtier (1) et l'élément de liaison (4) étant lié par complémentarité de formes au boîtier (1).

6. Procédé de fabrication d'un dispositif de ventilation pour la ventilation de l'habitacle (F) d'un véhicule, par une technique de moulage-injection en plusieurs étapes, le dispositif de ventilation comprenant un boîtier (1), au moins un volet de fermeture (3), un joint (7) placé entre le boîtier (1) et le volet de fermeture (3), et un élément de liaison (4, 8) pour le montage pivotant du volet de fermeture (3) sur le boîtier (1), **caractérisé par** les étapes de procédé suivantes :
- moulage par injection du boîtier (1), en une matière plastique dure, dans un outil de moulage,
- moulage par injection du volet de fermeture (3), en une matière plastique de moindre dureté, dans l'outil de moulage, sans liaison avec le boîtier (1), le volet de fermeture (3) se trouvant dans une position de fermeture,
- moulage par injection du joint (7) entre le volet de fermeture (3) et le boîtier (1), en une matière plastique élastique souple, le boîtier (1) et le volet de fermeture (3) servant par tronçons d'outil de moulage et, par le choix des matières plastiques, un accrochage mécanique ayant lieu entre le matériau du joint et le volet de fermeture (3), mais pas entre le matériau du joint et le boîtier (1),
- moulage par injection de l'élément de liaison (8) entre le volet de fermeture (3) et le boîtier (1), en une matière plastique dont la dureté se situe entre celle du boîtier (1) et celle du volet de fermeture (3), un accrochage mécanique ayant lieu d'une part entre l'élément de liaison (8) et le volet de fermeture (3), et d'autre part entre l'élément de liaison (8) et le boîtier (1).
